# EUROPEAN PATENT SPECIFICATION

(11) **EP 4 005 905 B1**
(45) Date of publication and mention of the grant of the patent: **12.06.2024**
(21) Application number: 20858321.1
(22) Date of filing: 28.08.2020
(51) Int. Cl.: B62J 17/086, B62J 17/06, B62K 5/10, B62K 5/08, B62K 5/06, B62K 5/05, B62J 17/04

(54) **LEANING VEHICLE**
NEIGEFAHRZEUG
VÉHICULE INCLINABLE

(30) Priority: 30.08.2019 JP 2019158751
(43) Date of publication of application: 01.06.2022
(73) Proprietor: Yamaha Hatsudoki Kabushiki Kaisha, Iwata-shi, Shizuoka 438-8501 (JP)
(72) Inventor: OHNO, Kohsuke, Iwata-shi, Shizuoka 438-8501 (JP)
(74) Representative: Stöckeler, Ferdinand
(86) International application number: PCT/JP2020/032676
(87) International publication number: WO 2021/039990

(56) References cited:
- WO-A1-2015/002170
- CN-A- 101 698 420
- JP-A- S 538 941
- JP-A- H07 277 248
- JP-A- H10 309 988
- JP-A- S53 104 938
- JP-A- 2002 211 464
- JP-A- 2007 111 380
- JP-A- 2011 110 940
- JP-A- 2013 071 547
- JP-S- 1 595 205
- US-A- 6 015 022

## Description

### TECHNICAL FIELD

The present teaching relates to a leaning vehicle.

### BACKGROUND ART

A known leaning vehicle is configured to lean leftward when turning to the left and lean rightward when turning to the right. As such a leaning vehicle, Patent Document 1 and Non-patent Document 1 disclose vehicles including two front wheels. The two front wheels include a left front wheel and a right front wheel.

The vehicles disclosed in Patent Document 1 and Non-patent Document 1 include a vehicle body cover which constitutes a cabin capable of accommodating a driver seated on a seat and has an opening at the left or the right.

Leaning vehicles comprising windows are disclosed in US 6 015 022 A, JP S53 104938 A, JP 2011 110940 A, JP 2013 071547 A, and JP S53 8941 A.

The document JP S53 104938 A discloses the features of the preamble of claim 1.

### CITATION LIST

### PATENT DOCUMENT

Patent Document 1: Japanese Design Registration No. 1595205

### NON-PATENT DOCUMENT

Non-patent Document 1: "YAMAHA MWC-4", Yamaha Hatsudoki Kabushiki Kaisha, [Searched on July 30, 2019], Internet (https://global.yamaha-motor.com/jp/profile/design/concept/mwc4/)

### SUMMARY OF INVENTION

### TECHNICAL PROBLEM

The leaning vehicles as in Patent Document 1 and Non-patent Document 1 described above are provided with, for example, an illuminating light and a rearview mirror in a front portion of the vehicle main body. Thus, in these leaning vehicles, the front portion of the vehicle main body increases in size, and a driver seated on the seat has some difficulty in visually recognizing the front wheels. When the driver has difficulty in visually recognizing the front wheels in this way, the driver cannot easily intuitively grasp the vehicle width of the vehicle.

In contrast, the front portion having a reduced dimension in the left-right direction in the vehicle main body makes the front wheels easily visible to the driver. This enables the driver to easily grasp the vehicle width of the vehicle. The reduced dimension of the front portion in the left-right direction in the vehicle main body as described above, however, imposes certain constraints on adoptable design to the front portion of the vehicle main body.

It is therefore an object of the present teaching to provide a leaning vehicle which allows for both design flexibility of a front portion of a vehicle main body and easy intuitive grasp of a vehicle width of the vehicle.

### SOLUTION TO PROBLEM

The invention provides a leaning vehicle according to claim 1. Further developments of the invention are defined in the dependent claims.

The inventor of the present teaching studied a configuration of a leaning vehicle which allows for both design flexibility of a front portion of a vehicle main body and easy intuitive grasp of a vehicle width of the vehicle. Through an intensive study, the inventor arrived at the configurations as described below.

A leaning vehicle according to one embodiment of the present teaching is a leaning vehicle configured to lean leftward when turning to the left and lean rightward when turning to the right. The leaning vehicle includes: a vehicle body frame; a seat supported by the vehicle body frame and on which a driver is seated; a left front wheel unit located at the left of the vehicle body frame and including a left front wheel; a right front wheel unit located at the right of the vehicle body frame and including a right front wheel; and a front-portion-vehicle-body cover located on the vehicle body frame between the left and right front wheel units and the seat in a front-rear direction, such that the front-portion-vehicle-body cover covers a front of the driver seated on the seat. The front-portion-vehicle-body cover includes a light transmitting part which is made of a light transmissive material and sized to enable the driver seated on the seat to visually recognize therethrough at least a part of the left front wheel unit and at least a part of the right front wheel unit even in a state where the leaning vehicle leans leftward or rightward. At least a part of the light transmitting part is disposed at a part of the front-portion-vehicle-body cover arranged at the rear of the left and right front wheels and in a space between the left and right front wheel units and the seat when seen from a left-rigth direction of the vehicle body frame.

The front-portion-vehicle-body cover, located between the left and right front wheel units and the seat in the front-rear direction in a manner to cover the front of the driver seated on the seat, includes the light transmitting part as described above, so that the driver seated on the seat can visually recognize at least a part of the left front wheel unit and at least a part of the right front wheel unit through the light transmitting part. In addition, the light transmitting part is sized to enable the driver seated on the seat to visually recognize therethrough at least a part of the left front wheel unit and at least a part of the right front wheel unit even in a state where the leaning vehicle leans leftward or rightward. Accordingly, the driver seated on the seat can easily grasp the positions of the left and right front wheels.

The front-portion-vehicle-body cover provided with the light transmitting part enables the driver seated on the seat to visually recognize at least a part of the left front wheel unit and at least a part of the right front wheel unit, without reducing in size the front portion of the vehicle main body in the left-right direction. This can prevent a decrease in design flexibility of the front portion of the vehicle main body.

Therefore, it is possible to provide the leaning vehicle which allows for both design flexibility of the front portion of the vehicle main body and easy intuitive grasp of the vehicle width of the vehicle by the driver.

In another aspect, the leaning vehicle according to the present teaching preferably has the following configuration. The light transmitting part is provided in the front-portion-vehicle-body cover at a position which enables the driver seated on the seat to visually recognize therethrough, in a top-bottom direction, at least a portion between an upper end and a lower end of the left front wheel unit and at least a portion between an upper end and a lower end of the right front wheel unit.

Accordingly, the driver seated on the seat can visually recognize the left front wheel unit and the right front wheel unit directly through the light transmitting part, without reducing in size the front portion of the vehicle main body in the left-right direction. This enables the driver seated on the seat to more easily grasp the positions of the left and right front wheels. Therefore, it is possible to provide the leaning vehicle which allows for both design flexibility of the front portion of the vehicle main body and easy intuitive grasp of the vehicle width of the vehicle by the driver.

In another aspect, the leaning vehicle according to the present teaching preferably has the following configuration. The left front wheel unit and the right front wheel unit are disposed ahead of the front-portion-vehicle-body cover such that the left and right front wheel units at least partially overlap the front-portion-vehicle-body cover in a front view of the vehicle.

Accordingly, the left front wheel and the right front wheel can be disposed closer to the front-portion-vehicle-body cover in the left-right direction, and with this arrangement, when the driver seated on the seat visually recognizes the left and right front wheel units through the light transmitting part, a broader range of each of the left and right front wheel units is made visible, as at least a part of the left front wheel unit and at least a part of the right front wheel unit, which are visually recognized by the driver. This can enhance design flexibility of the light transmitting part provided in the front-portion-vehicle-body cover.

With the configuration described above, the driver seated on the seat can more easily recognize the positions of the left front wheel unit and the right front wheel unit. Therefore, it is possible to provide the leaning vehicle which allows for both design flexibility of the front portion of the vehicle main body and easy intuitive grasp of the vehicle width of the vehicle by the driver.

In another aspect, the leaning vehicle according to the present teaching preferably has the following configuration. The light transmitting part includes a left-light-transmitting part which enables the driver seated on the seat to visually recognize therethrough at least a part of the left front wheel unit, and a right-light-transmitting part which enables the driver seated on the seat to visually recognize therethrough at least a part of the right front wheel unit.

Thus, the left-light-transmitting part and the right-light-transmitting part can be formed on the front-portion-vehicle-body cover, such that each of the left and right front wheel units is easily visible, as compared with a front-portion-vehicle-body cover, the entirety of which is formed as a light transmitting part. This enables the driver seated on the seat to more easily grasp the positions of the left and right front wheels, without reducing in size the front portion of the vehicle main body in the left-right direction. Therefore, it is possible to provide the leaning vehicle which allows for both design flexibility of the front portion of the vehicle main body and easy intuitive grasp of the vehicle width of the vehicle by the driver.

In another aspect, the leaning vehicle according to the present teaching preferably has the following configuration. The light transmitting part is formed on the front-portion-vehicle-body cover such that an upper portion of the light transmitting part is located further upward than a seat surface of the seat and a lower portion of the light transmitting part is located further downward than the seat surface of the seat, in the front view of the vehicle.

Accordingly, if drivers have different fields of view depending on their different body types, the drivers, while seated on the seat, can visually recognize the left front wheel unit and the right front wheel unit through the light transmitting part. Thus, without reducing in size the front portion of the vehicle main body in the left-right direction, drivers of any body type can easily grasp the positions of the left front wheel and the right front wheel while seated on the seat. Therefore, it is possible to provide the leaning vehicle which allows for both design flexibility of the front portion of the vehicle main body and easy intuitive grasp of the vehicle width of the vehicle by the driver.

In another aspect, the leaning vehicle according to the present teaching preferably has the following configuration. The leaning vehicle includes a vehicle body cover having the front-portion-vehicle-body cover and constituting a cabin which can accommodate the driver seated on the seat.

Accordingly, the light transmitting part can be formed on the front-portion-vehicle-body cover for an easy grasp of the positions of the left and right front wheels, irrespective of whether there is a cabin or not. That is, the shape of the cabin can be determined, irrespective of whether the driver seated on the seat easily grasps the left and right front wheels. Accordingly, it is possible to provide the leaning vehicle with the cabin, where both design flexibility of the front portion of the vehicle main body and easy intuitive grasp of the vehicle width of the vehicle by the driver can be achieved.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, elements, components, and/or their equivalents but do not preclude the presence or addition of one or more steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

An embodiment of a leaning vehicle according to the present teaching will be herein described.

In the following description, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right in a left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles.

### [Passenger Space]

A passenger space herein refers to a space in which a driver seated on a seat is located in the leaning vehicle. In a case where the leaning vehicle includes a vehicle body frame constituting a cabin, the passenger space is constituted by the cabin. In a case where the leaning vehicle does not include the vehicle body frame constituting the cabin, the passenger space is a space not encompassed by the vehicle body frame. That is, in the case where the leaning vehicle does not include the vehicle body frame constituting the cabin, the passenger space includes a space located further rearward than a front-portion-vehicle cover.

### [Left Front Wheel Unit and Right Front Wheel Unit]

A left front wheel unit herein includes not only a left front wheel, but also a member which rotates together with the left front wheel about a rotation axis extending in a top-bottom direction and moves upward or downward together with the left front wheel, such as a left front fender disposed above the left front wheel. A right front wheel unit herein includes not only a right front wheel, but also a member which rotates together with the right front wheel about a rotation axis extending in the top-bottom direction and moves upward or downward together with the right front wheel, such as a right front fender disposed above the right front wheel.

### [Upper End of Left Front Wheel Unit and Upper End of Right Front Wheel Unit]

The upper end of the left front wheel unit herein refers to the highest portion of the left front wheel unit in the top-bottom direction while the leaning vehicle stops or travels. The upper end of the right front wheel unit herein refers to the highest portion of the right front wheel unit in the top-bottom direction while the leaning vehicle stops or travels.

### [Lower End of Left Front Wheel Unit and Lower End of Right Front Wheel Unit]

The lower end of the left front wheel unit herein refers to the lowest portion of the left front wheel unit in the top-bottom direction while the leaning vehicle stops or travels. The lower end of the right front wheel unit herein refers to the lowest portion of the right front wheel unit in the top-bottom direction while the leaning vehicle stops or travels.

### ADVANTAGEOUS EFFECTS OF INVENTION

In one embodiment of the present teaching, it is possible to provide a leaning vehicle which allows for both design flexibility of a front portion of a vehicle main body and easy intuitive grasp of a vehicle width of the vehicle.

### BRIEF DESCRIPTION OF DRAWINGS

[FIG. 1] FIG. 1 is a left side view schematically illustrating an overall configuration of a leaning vehicle according to an embodiment.
[FIG. 2] FIG. 2 is a front view schematically illustrating the overall configuration of the leaning vehicle.
[FIG. 3] FIG. 3 is a disassembled perspective view illustrating a schematic configuration of a vehicle body frame.
[FIG. 4] FIG. 4 is a plan view schematically illustrating a positional relationship among the vehicle body frame, a vehicle body cover, and a driver.
[FIG. 5] FIG. 5 is a schematic view of a leaning linkage mechanism with the vehicle body frame leaning leftward when the leaning linkage mechanism is seen toward the rear.
[FIG. 6] FIG. 6 is a schematic view of the leaning linkage mechanism with the vehicle body frame leaning rightward when the leaning linkage mechanism is seen toward the rear.
[FIG. 7] FIG. 7 is a front view illustrating the overall configuration of the leaning vehicle when the vehicle body frame leans leftward.
[FIG. 8] FIG. 8 shows a front view and a left side view of the leaning vehicle leaning leftward, together.

### DESCRIPTION OF EMBODIMENT

An embodiment will be described hereinafter with reference to the drawings. In the drawings, the same or corresponding parts are denoted by the same reference numerals, and description thereof will not be repeated. The dimensions of components in the drawings do not strictly represent actual dimensions of the components and dimensional proportions of the components.

In the following description, arrow F in the drawings represents a forward direction of a leaning vehicle 1. Arrow B in the drawings represents a rearward direction of the leaning vehicle 1. Arrow U in the drawings represents an upward direction of the leaning vehicle 1. Arrow D in the drawings represents a downward direction of the leaning vehicle 1. Arrow R in the drawings represents a rightward direction of the leaning vehicle 1. Arrow L in the drawings represents a leftward direction of the leaning vehicle 1. A front-rear direction, a left-right direction, and a top-bottom direction of the leaning vehicle 1 refer to a front-rear direction, a left-right direction, and a top-bottom direction, respectively, with respect to the leaning vehicle 1 when seen from a driver of the leaning vehicle 1.

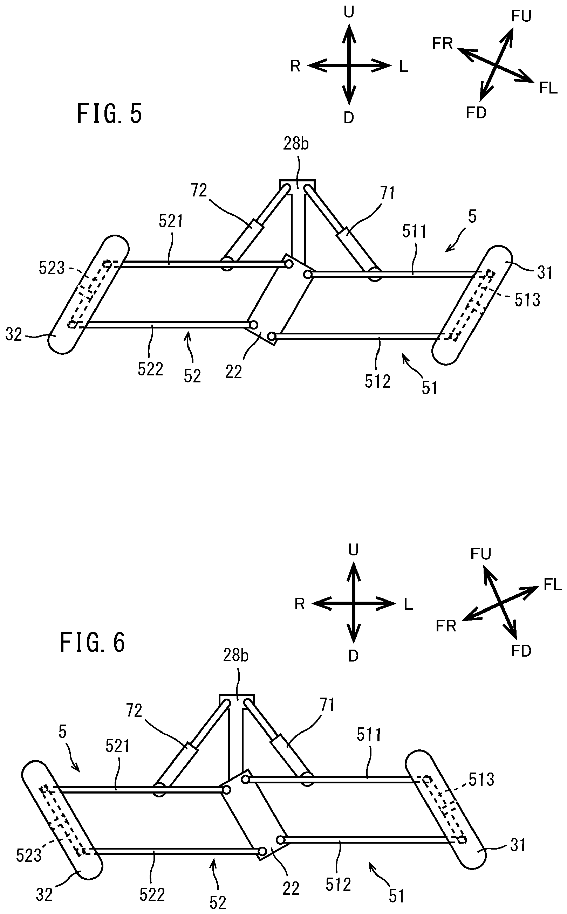

The leaning vehicle 1 according to this embodiment turns with a vehicle body frame 21 leaning leftward or rightward with respect to the vertical direction. Thus, in FIGS. 5 to 8 illustrating a state where the vehicle body frame 21 leans, in addition to the directions with respect to the leaning vehicle 1 described above, directions with respect to the vehicle body frame 21 are defined as follows.

Arrow FU in the drawings represents an upward direction of the vehicle body frame 21. Arrow FD in the drawings represents a downward direction of the vehicle body frame 21. Arrow FR in the drawings represents a rightward direction of the vehicle body frame 21. Arrow FL in the drawings represents a leftward direction of the vehicle body frame 21. A left-right direction and a top-bottom direction of the vehicle body frame 21 refer to a left-right direction and a top-bottom direction, respectively, with respect to the vehicle body frame 21 when seen from the driver driving the leaning vehicle 1.

### (Overall Configuration)

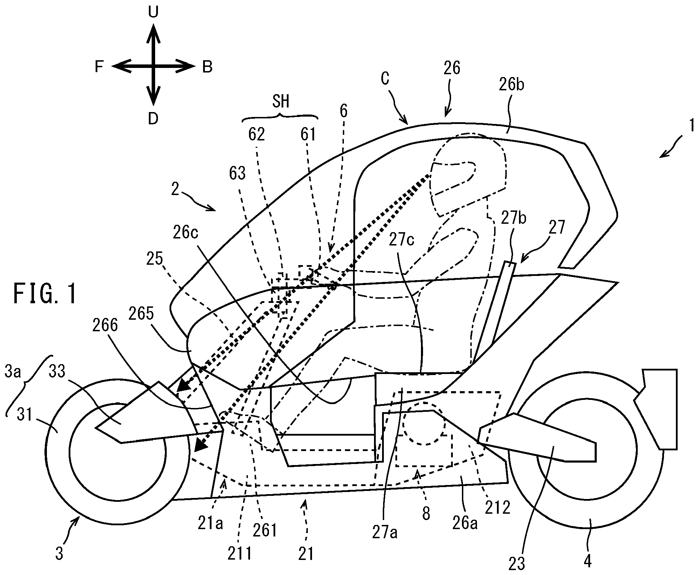

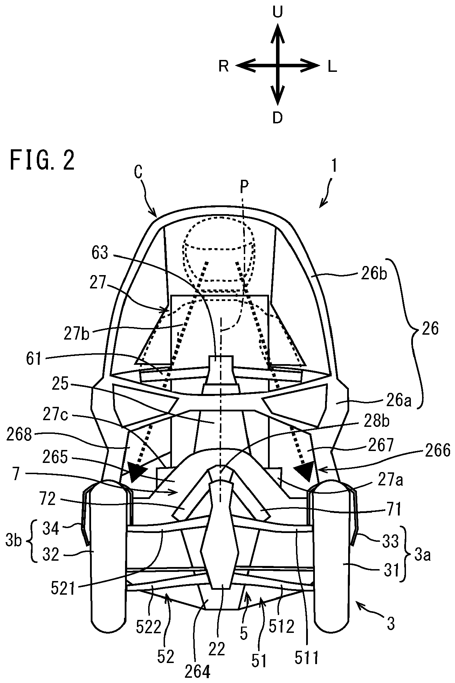

FIG. 1 is a left side view schematically illustrating an overall configuration of the leaning vehicle 1 according to the embodiment. FIG. 2 is a front view schematically illustrating the overall configuration of the leaning vehicle 1. The leaning vehicle 1 includes a vehicle main body 2, a pair of left and right front wheel units 3, a rear wheel 4, a leaning linkage mechanism 5, a steering mechanism 6, a buffer device 7, and a power unit 8 (driving source).

The leaning vehicle 1 according to this embodiment is a vehicle that leans leftward when turning to the left and leans rightward when turning to the right. That is, the leaning vehicle 1 according to this embodiment is a vehicle in which the vehicle main body 2 and the pair of left and right front wheel units 3 lean leftward when turning to the left and the vehicle main body 2 and the pair of left and right front wheel units 3 lean rightward when turning to the right.

As illustrated in FIGS. 1 and 2, the vehicle main body 2 includes the vehicle body frame 21, a rear arm 23, a vehicle body cover 26, and a seat 27. In FIGS. 1 and 2, the vehicle body frame 21 is in an upright state. In the case of referring to FIGS. 1 and 2, the following description is based on a premise that the vehicle body frame 21 is in the upright state. The upright state of the vehicle body frame 21 refers to a state where the top-bottom direction of the vehicle body frame 21 coincides with the vertical direction.

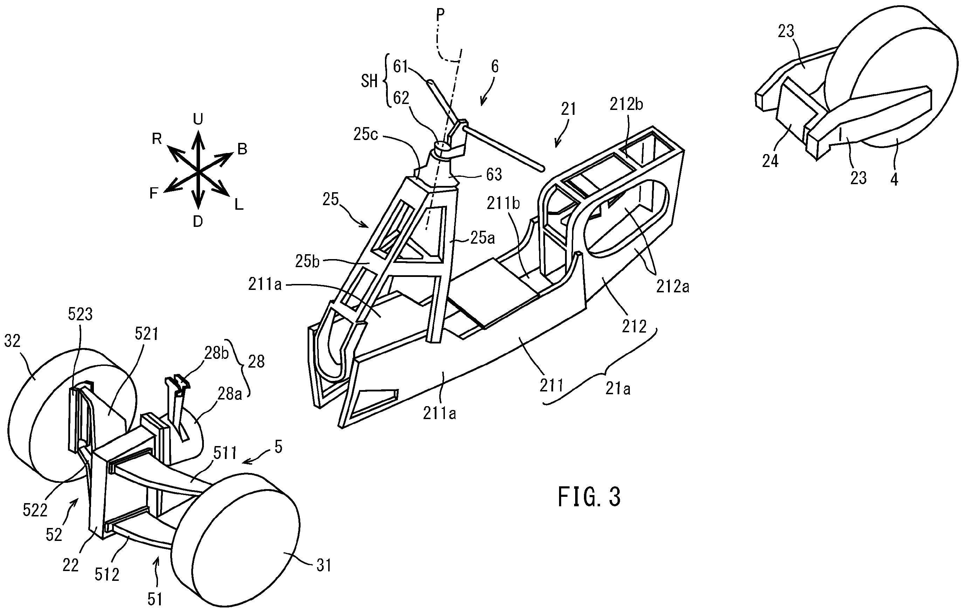

As illustrated in FIG. 1, the vehicle body frame 21 supports mounted parts mounted on the leaning vehicle 1, such as the vehicle body cover 26, the seat 27, and the power unit 8. Specifically, a front portion of the vehicle body frame 21 supports the leaning linkage mechanism 5. A rear portion of the vehicle body frame 21 supports a rear-arm-support part 24 (see FIG. 3), the seat 27, and the power unit 8.

The power unit 8 includes a motor as a power generating source, for example. The power unit 8 may include an engine or may have a hybrid system including a combination of an engine and a motor, as the power generating source.

FIG. 3 is a disassembled perspective view illustrating a schematic configuration of the vehicle body frame 21, the pair of left and right front wheel units 3, the rear wheel 4, the leaning linkage mechanism 5, and the steering mechanism 6. As illustrated in FIG. 3, the vehicle body frame 21 includes a main framework part 21a, a leaning-linkage-mechanism-support part 22, the rear-arm-support part 24, and a handlebar support part 25.

The main framework part 21a is a frame constituting a framework of the vehicle main body 2 of the leaning vehicle 1. The main framework part 21a linearly extends in the front-rear direction. That is, the width of the main framework part 21a in the left- right direction is smaller than the length of the main framework part 21a in the front-rear direction. The main framework part 21a includes a front framework part 211 and a rear framework part 212. The front framework part 211 and the rear framework part 212 are aligned in the front-rear direction and are coupled to each other.

The front framework part 211 is located ahead of the rear framework part 212 in the main framework part 21a. The front framework part 211 extends in the front-rear direction. The front framework part 211 includes a pair of front-framework-side-wall portions 211a and a front-framework-bottom-wall portion 21 1b. The pair of front-framework-side-wall portions 211a is disposed side by side in the left-right direction and elongated in the front-rear direction. The front-framework-bottom-wall portion 211b connects lower end portions of the pair of front-framework-side-wall portions 211a. The pair of front-framework-side-wall portions 211a and the front-framework-bottom-wall portion 211b are connected to each other by, for example, welding. The pair of front-framework-side-wall portions 211a and the front-framework-bottom-wall portion 211b may be connected to each other by, for example, bonding or bolts, or may be integrally formed.

The height of the pair of front-framework-side-wall portions 211a is lower in rear portions than front portions. Accordingly, the front framework part 211 is allowed to be placed near the feet of a driver seated on a seat surface 27c of the seat 27. Thus, the main framework part 21a can be disposed in a lower portion of the leaning vehicle 1. Accordingly, the barycenter of the leaning vehicle 1 can be lowered. The height as used in this embodiment refers to the height from the road surface on which the leaning vehicle 1 is traveling.

The rear framework part 212 is located behind the front framework part 211 in the main framework part 21a. The rear framework part 212 extends in the front-rear direction. The rear framework part 212 includes a pair of rear-framework-side-wall-portions 212a and a plurality of rear-framework-beam portions 212b. The pair of rear-framework-side-wall-portions 212a is disposed side by side in the left-right direction and elongated in the front-rear direction. The plurality of rear-framework-beam portions 212b connect the pair of rear-framework-side-wall-portions 212a in the left-right direction.

The dimension of the rear framework part 212 in the top-bottom direction is larger than the dimension of the front framework part 211 in the top-bottom direction. The dimension of the rear framework part 212 in the left-right direction is smaller than the dimension of the front framework part 211 in the left-right direction.

A front portion of the front framework part 211 supports the leaning-linkage-mechanism-support part 22. A front portion of the rear framework part 212 supports the power unit 8 and the seat 27, and a rear portion of the rear framework part 212 supports the rear-arm-support part 24.

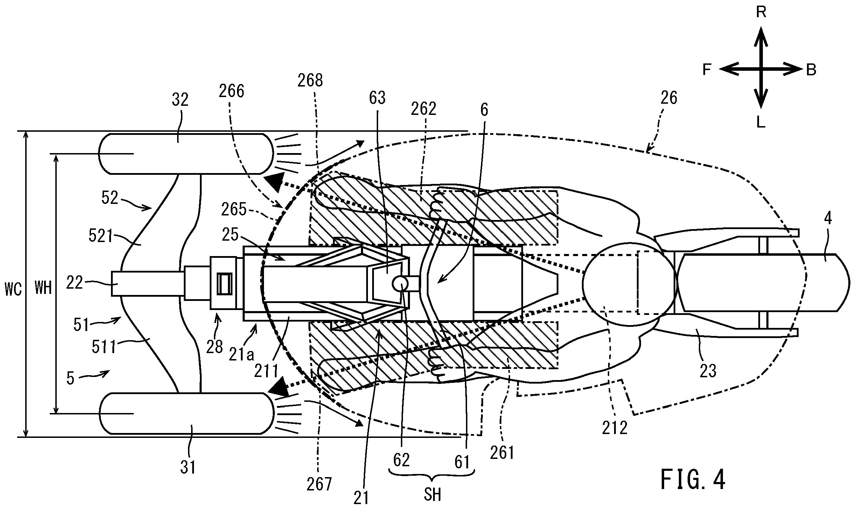

As illustrated in FIG. 4, the main framework part 21a is located between a left step 261 and a right step 262 described later and provided in a vehicle-body-cover-main body 26a, in plan view. That is, the main framework part 21a linearly extends in the front-rear direction between legs of the driver whose feet are placed on the left step 261 and the right step 262 in a state where the driver is seated on the seat 27.

As illustrated in FIG. 1, the seat 27 is supported by the rear framework part 212 of the vehicle body frame 21. The seat 27 includes a seat portion 27a and a seat back 27b. The seat portion 27a of the seat 27 is supported by an upper portion of the rear framework part 212. The upper surface of the seat portion 27a is the seat surface 27c on which the driver is seated.

As illustrated in FIG. 3, the leaning-linkage-mechanism-support part 22 is connected to the front end of the front framework part 211. The leaning-linkage-mechanism-support part 22 supports the leaning linkage mechanism 5 described later. The leaning linkage mechanism 5 supports the pair of left and right front wheel units 3. That is, the leaning-linkage-mechanism-support part 22 supports the pair of left and right front wheel units 3 through the leaning linkage mechanism 5. The configuration of the leaning linkage mechanism 5 will be specifically described later.

As illustrated in FIGS. 2 and 3, the pair of left and right front wheel units 3 includes a left front wheel unit 3a located at the left of the vehicle body frame 21 and a right front wheel unit 3b located at the right of the vehicle body frame 21.

The left front wheel unit 3a includes a left front wheel 31 and a left front fender 33 located above the left front wheel 31. The left front fender 33 is fixed to the left front wheel 31 such that the left front fender 33 rotates together with the left front wheel 31 about an unillustrated rotation axis extending in the top-bottom direction and moves upward or downward together with the left front wheel 31. The left front wheel unit 3a may include other members which rotate together with the left front wheel 31 about the unillustrated rotation axis extending in the top-bottom direction and move upward or downward together with the left front wheel 31.

The right front wheel unit 3b includes a right front wheel 32 and a right front fender 34 located above the right front wheel 32. The right front fender 34 is fixed to the right front wheel 32 such that the right front fender 34 rotates together with the right front wheel 32 about an unillustrated rotation axis extending in the top-bottom direction and moves upward or downward together with the right front wheel 32. The right front wheel unit 3b may include other members which rotate together with the right front wheel 32 about the unillustrated rotation axis extending in the top-bottom direction and move upward or downward together with the right front wheel 32.

A left arm mechanism 51 of the leaning linkage mechanism 5 described later extends leftward from the leaning-linkage-mechanism-support part 22 to support the left front wheel 31 to the vehicle body frame 21. A right arm mechanism 52 of the leaning linkage mechanism 5 described later extends rightward from the leaning-linkage-mechanism-support part 22 to support the right front wheel 32 to the vehicle body frame 21.

As illustrated in FIG. 3, a buffer-device-support part 28 supporting the buffer device 7 (see FIG. 2) is disposed between the leaning-linkage-mechanism-support part 22 and the front framework part 211. The buffer-device-support part 28 is connected to an upper portion of the leaning-linkage-mechanism-support part 22 and a front lower end portion of the handlebar support part 25 connected to the front framework part 211.

The buffer-device-support part 28 includes a buffer-device-support-main-body portion 28a and a tower portion 28b. The buffer-device-support-main-body portion 28a is a cylindrical member and supports a proximal end portion of the tower portion 28b extending in the top-bottom direction. The buffer-device-support-main-body portion 28a is connected to the leaning-linkage-mechanism-support part 22 and the front lower end portion of the handlebar support part 25.

As illustrated in FIG. 2, the buffer device 7 includes a left buffer device 71 and a right buffer device 72. The left buffer device 71 connects the tower portion 28b to a left-upper-arm member 511 of the leaning linkage mechanism 5 described later. The right buffer device 72 connects the tower portion 28b to a right-upper-arm member 521 of the leaning linkage mechanism 5 described later. Although not specifically illustrated, each of the left buffer device 71 and the right buffer device 72 includes a spring and a damper.

The left buffer device 71 buffers a force to be input to the left front wheel 31 from the road surface and positions the left front wheel 31 relative to the vehicle body frame 21 (see FIG. 1). The right buffer device 72 buffers a force to be input to the right front wheel 32 from the road surface and positions the right front wheel 32 relative to the vehicle body frame 21 (see FIG. 1).

As illustrated in FIG. 3, the handlebar support part 25 is connected to an upper portion of a front portion of the front framework part 211, and extends upward from an upper portion of the front framework part 211. A part of the handlebar support part 25 may extend upward from an upper portion of a portion except the front framework part 211 in the main framework part 21a. That is, the handlebar support part 25 may be provided in any manner in the main framework part 21a as long as the handlebar support part 25 at least partially extends upward from the upper portion of the front framework part 211.

The handlebar support part 25 may extend upward from an upper portion of a portion except the front framework part 211. That is, the handlebar support part 25 may extend upward from an upper portion of the main framework part 21a.

The handlebar support part 25 supports a bar handle 61 and a steering shaft 62 of the steering mechanism 6. The handlebar support part 25 has a height with which the bar handle 61 of the steering mechanism 6 is located at a position at which the driver seated on the seat surface 27c of the seat 27 can easily hold the bar handle 61.

The steering mechanism 6 includes the bar handle 61, the steering shaft 62, a steering-shaft-support part 63, and an unillustrated steering-force-transfer part. The bar handle 61 is a bar member extending in the left-right direction, and is connected to an upper end portion of the steering shaft 62. The steering shaft 62 is rotatably supported by the steering-shaft-support part 63 fixed to an upper portion of the handlebar support part 25, which will be described later. Although not specifically illustrated, the steering shaft 62 is connected to the steering-force-transfer part such that rotation of the bar handle 61 can be transferred to the steering-force-transfer part. The steering-force-transfer part transfers rotation of the steering shaft 62, as a steering force in the left direction or in the right direction, to the left front wheel 31 and the right front wheel 32. A detailed configuration of the steering-force-transfer part will be omitted.

The bar handle 61 and the steering shaft 62 constitute a steering handle SH. The steering shaft 62 is a portion supported by the steering-shaft-support part 63, and does not include other rotation shafts connected to the steering shaft 62 by transfer parts. The steering handle SH rotates about a steering axis P.

As illustrated in FIG. 3, the handlebar support part 25 according to this embodiment includes four handle-support-leg parts 25a, a plurality of handle-support-beam parts 25b, and a handle-support-top-panel part 25c. Each of the four handle-support-leg parts 25a and the plurality of handle-support-beam parts 25b is a plate-shaped bar member elongated in one direction. The handle-support-top-panel part 25c is a flat-plate member.

Upper end portions of the four handle-support-leg parts 25a are coupled to the handle-support-top-panel part 25c. The four handle-support-leg parts 25a are coupled to one another in the left-right direction by a part of the plurality of handle-support-beam parts 25b, and are coupled to each other in the front-rear direction by another part of the plurality of handle-support-beam parts 25b. In this embodiment, the four handle-support-leg parts 25a, the plurality of handle-support-beam parts 25b, and the handle-support-top-panel part 25c are integrally formed. Accordingly, the handlebar support part 25 is formed in a tower shape by the plate-shaped bar members.

Lower end portions of the four handle-support-leg parts 25a are fixed to the front framework part 211. The steering-shaft-support part 63 of the steering mechanism 6 described later is fixed to the top of the handle-support-top-panel part 25c. The bar handle 61 is coupled to the steering shaft 62 rotatably supported by the steering-shaft-support part 63. The handlebar support part 25 supports the steering handle SH constituted by the bar handle 61 and the steering shaft 62.

The rear-arm-support part 24 is connected to the rear end of the rear framework part 212. The rear-arm-support part 24 rotatably supports front portions of the pair of left and right rear arms 23. Each of the pair of left and right rear arms 23 extends rearward from the rear-arm-support part 24. Rear portions of the pair of left and right rear arms 23 rotatably support the rear wheel 4.

### (Leaning Linkage Mechanism)

A configuration of the leaning linkage mechanism 5 will now be described with reference to FIGS. 3, 5, and 6. FIG. 5 is a schematic view of the leaning linkage mechanism 5 with the vehicle body frame 21 leaning leftward, when the leaning linkage mechanism 5 is seen toward the rear. FIG. 6 is a schematic view of the leaning linkage mechanism 5 with the vehicle body frame 21 leaning rightward, when the leaning linkage mechanism 5 is seen toward the rear.

The leaning linkage mechanism 5 is a double wishbone-type linkage mechanism. The leaning linkage mechanism 5 is supported by the leaning-linkage-mechanism-support part 22. The leaning linkage mechanism 5 includes the left arm mechanism 51 and the right arm mechanism 52.

The left arm mechanism 51 is connected to a left portion of the leaning-linkage-mechanism-support part 22 and the left front wheel 31. As will be described later, the left arm mechanism 51 is rotatable upward or downward relative to each of the leaning-linkage-mechanism-support part 22 and the left front wheel 31. That is, the left arm mechanism 51 supports the left front wheel 31 with respect to the leaning-linkage-mechanism-support part 22 such that the left front wheel 31 is rotatable upward or downward.

The left arm mechanism 51 swings upward relative to the leaning-linkage-mechanism-support part 22 when the vehicle body frame 21 leans leftward, and swings downward relative to the leaning-linkage-mechanism-support part 22 when the vehicle body frame 21 leans rightward. The left arm mechanism 51 includes the left-upper-arm member 511, a left-lower-arm member 512, and a left knuckle 513.

The left-upper-arm member 511 is a flat-plate member and disposed between the leaning-linkage-mechanism-support part 22 and the left front wheel 31 to extend in the left-right direction. A right end portion of the left-upper-arm member 511 is connected to the leaning-linkage-mechanism-support part 22 to be rotatable upward or downward about the right end portion of the left-upper-arm member 511. A left end portion of the left-upper-arm member 511 is connected to the left knuckle 513 connected to the wheel member of the left front wheel 31 to be rotatable upward or downward about the left end portion of the left-upper-arm member 511.

The left-lower-arm member 512 is a flat-plate member and disposed under the left-upper-arm member 511 in parallel with the left-upper-arm member 511. That is, in a manner similar to the left-upper-arm member 511, the left-lower-arm member 512 is also disposed between the leaning-linkage-mechanism-support part 22 and the left front wheel 31 to extend in the left-right direction. A right end portion of the left-lower-arm member 512 is connected to the leaning-linkage-mechanism-support part 22 to be rotatable upward or downward about the right end portion of the left-lower-arm member 512. A left end portion of the left-lower-arm member 512 is connected to the left knuckle 513 connected to the wheel member of the left front wheel 31 to be rotatable upward or downward about the left end portion of the left-lower-arm member 512.

With the configuration of the left arm mechanism 51 described above, when the vehicle body frame 21 leans leftward, the left knuckle 513 leans leftward in parallel with the leaning-linkage-mechanism-support part 22. At this time, the left-upper-arm member 511 and the left-lower-arm member 512 are kept in the parallel state. On the other hand, when the vehicle body frame 21 leans rightward, the left knuckle 513 leans rightward in parallel with the leaning-linkage-mechanism-support part 22. At this time, the left-upper-arm member 511 and the left-lower-arm member 512 are kept in the parallel state.

The right arm mechanism 52 is connected to a right portion of the leaning-linkage-mechanism-support part 22 and the right front wheel 32. As will be described later, the right arm mechanism 52 is rotatable upward or downward relative to each of the leaning-linkage-mechanism-support part 22 and the right front wheel 32. That is, the right arm mechanism 52 supports the right front wheel 32 with respect to the leaning-linkage-mechanism-support part 22 such that the right front wheel 32 is rotatable upward or downward.

The right arm mechanism 52 swings downward relative to the leaning-linkage-mechanism-support part 22 when the vehicle body frame 21 leans leftward, and swings upward relative to the leaning-linkage-mechanism-support part 22 when the vehicle body frame 21 leans rightward. The right arm mechanism 52 includes the right-upper-arm member 521, a right-lower-arm member 522, and a right knuckle 523.

The right-upper-arm member 521 is a flat-plate member and disposed between the leaning-linkage-mechanism-support part 22 and the right front wheel 32 to extend in the left-right direction. A left end portion of the right-upper-arm member 521 is connected to the leaning-linkage-mechanism-support part 22 to be rotatable upward or downward about the left end portion of the right-upper-arm member 521. A right end portion of the right-upper-arm member 521 is connected to the right knuckle 523 connected to the wheel member of the right front wheel 32 to be rotatable upward or downward about the right end portion of the right-upper-arm member 521.

The right-lower-arm member 522 is a flat-plate member and disposed under the right-upper-arm member 521 in parallel with the right-upper-arm member 521. That is, in a manner similar to the right-upper-arm member 521, the right-lower-arm member 522 is also disposed between the leaning-linkage-mechanism-support part 22 and the right front wheel 32 to extend in the left-right direction. A left end portion of the right-lower-arm member 522 is connected to the leaning-linkage-mechanism-support part 22 to be rotatable upward or downward about the left end portion of the right-lower-arm member 522. A right end portion of the right-lower-arm member 522 is connected to the right knuckle 523 connected to the wheel member of the right front wheel 32 to be rotatable upward or downward about the right end portion of the right-lower-arm member 522.

With the configuration of the right arm mechanism 52 described above, when the vehicle body frame 21 leans leftward, the right knuckle 523 leans leftward in parallel with the leaning-linkage-mechanism-support part 22. At this time, the right-upper-arm member 521 and the right-lower-arm member 522 are kept in the parallel state. On the other hand, when the vehicle body frame 21 leans rightward, the right knuckle 523 leans rightward in parallel with the leaning-linkage-mechanism-support part 22. At this time, the right-upper-arm member 521 and the right-lower-arm member 522 are kept in the parallel state.

In this manner, with the leaning linkage mechanism 5 with the configuration described above, the vehicle body frame 21, the left front wheel 31, and the right front wheel 32 are allowed to lean leftward or rightward.

Although not specifically illustrated, the leaning of the above-described leaning linkage mechanism 5 in the left direction or in the right direction may be controlled by a linkage-mechanism-driving motor. The linkage-mechanism-driving motor is disposed, for example, further rearward than the leaning-linkage-mechanism-support part 22 and behind a motor cover 264 (see FIG. 2) described later.

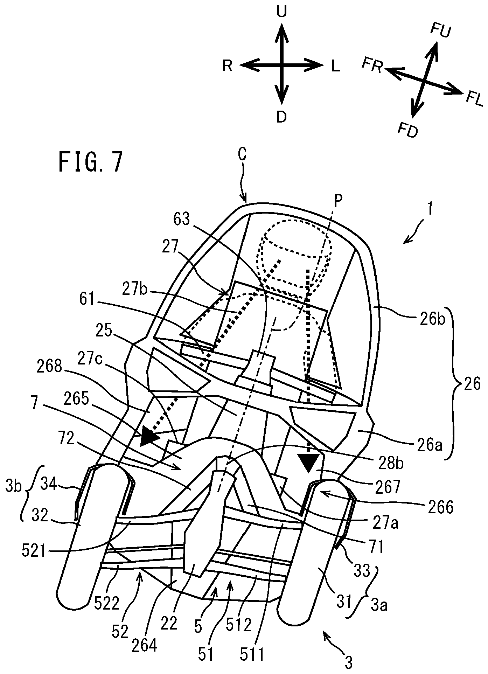

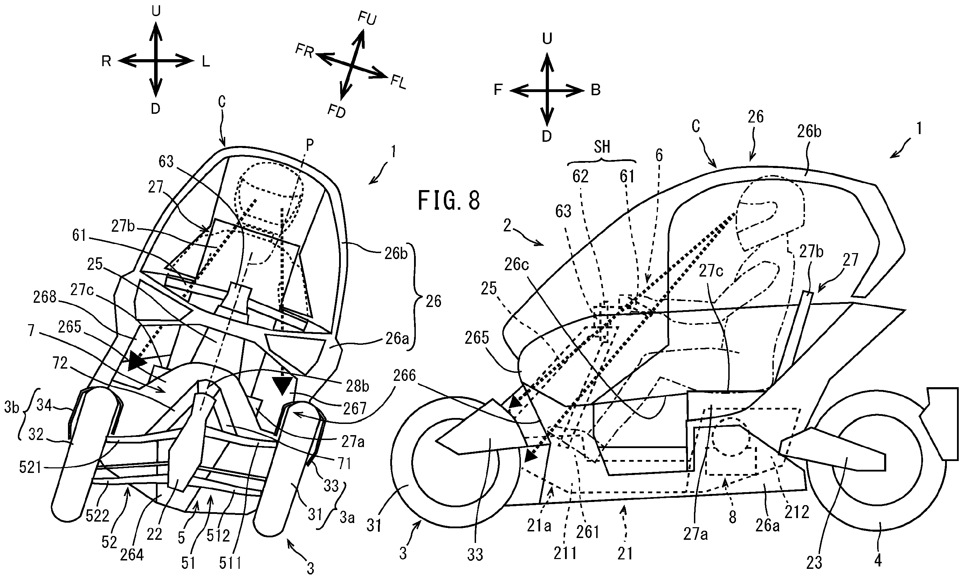

FIG. 7 is a front view of the leaning vehicle 1 leaning leftward by the leaning linkage mechanism 5 with the configuration described above. The leaning linkage mechanism 5 described above brings the vehicle body frame 21 into a lean state that is leftward leaning or rightward leaning. FIG. 8 shows FIG. 7, and a left side view of the leaning vehicle 1 leaning leftward, together.

### (Vehicle Body Cover)

A configuration of the vehicle body cover 26 will now be described in detail.

The vehicle body cover 26 is supported by the vehicle body frame 21. As illustrated in FIGS. 1 and 2, the vehicle body cover 26 includes the vehicle-body-cover-main body 26a covering the vehicle body frame 21, and an upper cover 26b located above the vehicle-body-cover-main body 26a. The upper cover 26b has a convex shape projecting upward when seen in the left-right direction. The upper cover 26b is located over the head of the driver seated on the seat surface 27c of the seat 27.

Accordingly, the upper cover 26b constitutes a passenger space in which the driver rides, between the upper cover 26b and the vehicle-body-cover-main body 26a. That is, the upper cover 26b and the vehicle-body-cover-main body 26a form a cabin C that defines the passenger space and accommodates the driver seated on the seat surface 27c of the seat 27. The cabin C includes a front-portion-vehicle-body-cover part 265 described later.

The cabin C may be constituted only by the vehicle-body-cover-main body 26a. The vehicle-body-cover-main body 26a constituting the cabin C may not include a portion covering a left portion of the driver, may not include a portion covering a right portion of the driver, may not include a portion covering a rear portion of the driver, or may not include some of these portions.

The vehicle-body-cover-main body 26a covers the right portion of the driver seated on the seat surface 27c of the seat 27, and leaves the left portion of the driver open. Accordingly, the driver is allowed to get on or off the leaning vehicle 1 from the left.

A right lower portion of the vehicle-body-cover-main body 26a has an opening 26c. The opening 26c is provided to allow the right foot of the driver seated on the seat surface 27c of the seat 27 to be placed on the ground through the opening 26c. That is, the leaning vehicle 1 includes the vehicle body cover 26 located at the right of the driver seated on the seat 27 to cover the right portion of the driver, and the vehicle body cover 26 has the opening 26c through which the right foot of the driver seated on the seat 27 is allowed to pass when the right foot of the driver is placed on the ground. As a result, convenience of the leaning vehicle 1 can be enhanced.

In a front lower portion of the vehicle-body-cover-main body 26a facing the passenger space, the left step 261 and the right step 262 (see FIG. 4) are provided. That is, the left step 261 and the right step 262 are disposed in a rear portion of the front-portion-vehicle-body-cover part 265 described later of the vehicle-body-cover-main body 26a. The left step 261 is located in a left portion of the vehicle-body-cover-main body 26a, and the left foot of the driver seated on the seat surface 27c of the seat 27 is placed on the left step 261. The right step 262 is located in a right portion of the vehicle-body-cover-main body 26a, and the right foot of the driver seated on the seat surface 27c of the seat 27 is placed on the right step 262.

FIG. 4 is a plan view schematically illustrating a relationship among the driver, the vehicle body frame 21, and the vehicle body cover 26. In FIG. 4, parts of the leaning vehicle 1 except the vehicle body frame 21, the left front wheel 31, the right front wheel 32, the rear wheel 4, and the leaning linkage mechanism 5 are not shown for description, and the outer shape of the vehicle body cover 26 is indicated by an alternate long and short dash line.

The left step 261 is located at the left of the main framework part 21a. The right step 262 is located at the right of the main framework part 21a. That is, the main framework part 21a is located between the left step 261 and the right step 262 in the left-right direction. In FIG. 4, the left step 261 and the right step 262 are indicated by chain double-dashed lines and slashes, for description.

In this embodiment, the left step 261 and the right step 262 are formed integrally with the vehicle-body-cover-main body 26a. The left step 261 and the right step 262 may be separately provided from the vehicle-body-cover-main body 26a.

With the configuration described above, the left step 261 and the right step 262 are supported by the main framework part 21a with the vehicle-body-cover-main body 26a interposed therebetween. The main framework part 21a may be provided with step support parts individually supporting the left step and the right step. In this case, the left step and the right step are supported on the main framework part 21a by the step support parts.

As illustrated in FIG. 2, the front-portion-vehicle-body-cover part 265 (front portion vehicle body cover) covering the front of the driver seated on the seat surface 27c of the seat 27 is provided on a front portion of the vehicle-body-cover-main body 26a. That is, the vehicle body cover 26 includes the front-portion-vehicle-body-cover part 265. The front-portion-vehicle-body-cover part 265 constitutes a front portion of the cabin C. The motor cover 264 covering the front of the linkage-mechanism-driving motor for driving the leaning linkage mechanism 5 is provided below the front-portion-vehicle-body-cover part 265.

As illustrated in FIG. 1, the front-portion-vehicle-body-cover part 265 is located further rearward than the left front wheel 31 and the right front wheel 32. Specifically, the front-portion-vehicle-body-cover part 265 is located on the main framework part 21a between the left and right front wheels 31 and 32 and the seat 27 in the front-rear direction to cover the front of the driver seated on the seat surface 27c of the seat 27.

As illustrated in FIG. 4, in this embodiment, a maximum dimension WC of the front-portion-vehicle-body-cover part 265 in the left-right direction is larger than a tread width WH between the left front wheel 31 and the right front wheel 32. In addition, the left step 261 and the right step 262 are disposed in the rear portion of the front-portion-vehicle-body-cover part 265.

Since the front-portion-vehicle-body-cover part 265 has the positional relationship with the left front wheel 31 and the right front wheel 32 described above, the front-portion-vehicle-body-cover part 265 can prevent water whirled up by the left front wheel 31 and the right front wheel 32 from entering the passenger space of the cabin C, as illustrated in FIG. 4. In FIG. 4, the water whirled up by the left front wheel 31 and the right front wheel 32 is indicated by solid lines, while the moving directions of the water that moves along the front-portion-vehicle-body-cover part 265 are indicated by solid arrows.

The front-portion-vehicle-body-cover part 265 includes a light transmitting part 266 through which the driver seated on the seat surface 27c of the seat 27 can visually recognize at least a part of the left front wheel unit 3a and at least a part of the right front wheel unit 3b directly. The light transmitting part 266 is made of a light transmissive material. The light transmitting part 266 allows light to pass therethrough, but does not allow gas and liquid to pass therethrough. The light transmitting part 266 may include, for example, a transparent portion constituted by a transparent material. The light transmitting part 266 may be made of any material as long as the light transmitting part 266 is made of a light transmissive material that allows light to pass therethrough. The light transmitting part 266 may be made of, for example, glass or acrylic resin. The light transmitting part 266 may not be transparent as long as the driver seated on the seat surface 27c of the seat 27 can visually recognize at least a part of the left front wheel unit 3a and at least a part of the right front wheel unit 3b directly.

FIG. 4 schematically illustrates the light transmitting part 266 by a thick alternate long and short dash line.

The light transmitting part 266 is provided in a lower portion of the front-portion-vehicle-body-cover part 265. The light transmitting part 266 is disposed at a position at which the driver seated on the seat surface 27c of the seat 27 can visually recognize at least a part of the left front wheel unit 3a and at least a part of the right front wheel unit 3b directly. Accordingly, as illustrated in FIGS. 1, 2, 4, 7 and 8, the driver seated on the seat surface 27c of the seat 27 can visually recognize at least a part of the left front wheel unit 3a and at least a part of the right front wheel unit 3b directly through the light transmitting part 266. In FIGS. 1, 2, 4, 7 and 8, the lines of sight of the driver are indicated by arrows of alternate long and short dash lines.

The light transmitting part 266 is sized to enable the driver seated on the seat surface 27c of the seat 27 can visually recognize therethrough at least a part of the left front wheel unit 3a and at least a part of the right front wheel unit 3b directly even in a state where the leaning vehicle 1 leans leftward or rightward as shown in FIG. 7. Accordingly, even in the state where the leaning vehicle 1 leans leftward or rightward, the driver seated on the seat surface 27c of the seat 27 can visually recognize at least a part of the left front wheel unit 3a and at least a part of the right front wheel unit 3b directly, through the light transmitting part 266.

Thus, the driver seated on the seat surface 27c of the seat 27 can easily intuitively grasp the vehicle width of the leaning vehicle 1. In addition, the configuration described above eliminates the necessity of reducing the dimension of the front-portion-vehicle-body-cover part 265 in the left-right direction to enable the driver to visually recognize at least a part of the left front wheel unit 3a and at least a part of the right front wheel unit 3b directly.

Therefore, it is possible to provide the leaning vehicle 1 which allows for both design flexibility of the front portion of the vehicle main body 2 and easy intuitive grasp of the vehicle width of the vehicle by the driver.

The light transmitting part 266 is provided in the front-portion-vehicle-body-cover part 265 at a position which enables the driver seated on the seat surface 27c of the seat 27 to visually recognize therethrough, in the top-bottom direction, at least a portion between the upper end and the lower end of the left front wheel unit 3a and at least a portion between the upper end and the lower end of the right front wheel unit 3b. Accordingly, the driver seated on the seat surface 27c of the seat 27 can visually recognize the left front wheel unit 3a and the right front wheel unit 3b directly through the light transmitting part 266.

The light transmitting part 266 includes a left-light-transmitting part 267 and a right-light-transmitting part 268. The left-light-transmitting part 267 is located, in the front-portion-vehicle-body-cover part 265, at the left with respect to the center of the front-portion-vehicle-body-cover part 265 in the left-right direction. That is, in a front view of the leaning vehicle 1, the left-light-transmitting part 267 is located further rightward than the handlebar support part 25. The right-light-transmitting part 268 is located, in the front-portion-vehicle-body-cover part 265, at the right with respect to the center of the front-portion-vehicle-body-cover part 265 in the left-right direction. That is, in the front view of the leaning vehicle 1, the right-light-transmitting part 268 is located further leftward than the handlebar support part 25. In this embodiment, the left-light-transmitting part 267 and the right-light-transmitting part 268 are integrally formed. That is, the left-light-transmitting part 267 and the right-light-transmitting part 268 are connected to each other in the left-right direction.

With the configuration described above, even in a case where the front-portion-vehicle-body-cover part 265 is located between the left and right front wheels 31, 32, and the driver seated on the seat surface 27c of the seat 27, the driver can visually recognize at least a part of the left front wheel unit 3a and at least a part of the right front wheel unit 3b directly, through the light transmitting part 266. In addition, even in a case where the leaning vehicle 1 leans leftward or rightward, the driver can visually recognize at least a part of the left front wheel unit 3a and at least a part of the right front wheel unit 3b through the light transmitting part 266. This can facilitate the driver's grasp of the positions of the left front wheel 31 and the right front wheel 32.

Accordingly, the driver can intuitively grasp the vehicle width of the leaning vehicle 1 without reducing in size the front portion of the vehicle main body 2 in the left-right direction. Therefore, when the leaning vehicle 1 travels a narrow roadway, for example, the driver can easily operate the leaning vehicle 1. This can enhance convenience of the leaning vehicle 1. As a result, it is possible to achieve both design flexibility of the front portion of the vehicle main body 2 and easy intuitive grasp of the vehicle width of the leaning vehicle 1 by the driver.

In this embodiment, the light transmitting part 266 is formed in the front-portion-vehicle-body-cover part 265 such that an upper portion of the light transmitting part 266 is located further upward than the seat surface 27c of the seat 27, while a lower portion thereof is located further downward than the seat surface 27c of the seat 27.

Accordingly, even in a case where drivers have different fields of view depending on their different body types, they can visually recognize at least a part of the left front wheel unit 3a and at least a part of the right front wheel unit 3b, through the light transmitting part 266. Thus, without reducing in size the front portion of the vehicle main body 2 in the left-right direction, drivers of any body type can more easily grasp the positions of the left front wheel 31 and the right front wheel 32 while seated on the seat surface 27c of the seat 27. Therefore, it is possible to achieve both design flexibility of the front portion of the vehicle main body 2 and easy intuitive grasp of the vehicle width of the leaning vehicle 1 by a driver.

As illustrated in FIG. 2, in this embodiment the front-portion-vehicle-body-cover part 265 is so arranged to overlap at least a part of the left front wheel 31 and the right front wheel 32 in the front view of the leaning vehicle 1. That is, the left front wheel 31 and the right front wheel 32 are disposed ahead of the front-portion-vehicle-body-cover part 265, such that the left front wheel 31 and the right front wheel 32 at least partially overlap the front-portion-vehicle-body-cover part 265 in the front view of the leaning vehicle 1.

Accordingly, the left front wheel 31 and the right front wheel 32 can be disposed closer to the front-portion-vehicle-body-cover part 265 in the left-right direction, and with this arrangement, when the driver seated on the seat surface 27c of the seat 27 visually recognizes the left front wheel unit 3a and the right front wheel unit 3b through the light transmitting part 266, a broader range of each of the left and right front wheel units 3a, 3b is made visible, as at least a part of the left front wheel unit 3a and at least a part of the right front wheel unit 3b, which are visually recognized by the driver. This can enhance design flexibility of the light transmitting part 266 provided in the front-portion-vehicle-body-cover part 265.

The inventor of the present teaching also concretely studied a leaning vehicle that enables a driver to easily grasp its size.

The inventor of the present teaching found, through the concrete study, that a driver easily grasps the size of the leaning vehicle if the driver can grasp the positions of two front wheels. The inventor then considered making an interval between the two front wheels in the left-right direction wider than a front-portion-vehicle-body cover located ahead of the driver seated on a seat, to thereby enable the driver to visually confirm the positions of upper portions of the two front wheels in a space located at the left and a space located at the right of the front-portion-vehicle-body cover. With this configuration, the driver can easily grasp the vehicle width of the leaning vehicle in the left-right direction from the positions of the two front wheels.

However, if the interval between the two front wheels is made wider than the width of the front-portion-vehicle-body cover in the left-right direction as described above, water whirled up by the two front wheels is in some cases prone to enter a passenger space where the driver is located, beyond the front-portion-vehicle-body cover. This is because a leaning vehicle is configured to change relative positions of two front wheels in the top-bottom direction in traveling, so that water is whirled up in broader ranges.

Thus, the inventor of the present teaching studied a configuration subject to few constraints due to the characteristics of the leaning vehicle as described above. Specifically, the inventor studied a configuration that provides an easy grasp of the size of the leaning vehicle to the driver, without making an interval in the left-right direction between the two front wheels wider than the front-portion-vehicle-body cover located ahead of the driver seated on the seat.

The inventor found, through a concrete study, that even if upper portions of the two front wheels are not visible, that the driver can grasp the positions of the front wheels if a part of either one of the two front wheels can be viewed. This is because humans have the ability to imagine the entirety of the front wheel even if they can view only a part of the front wheel. As a result of an intensive study based on this finding, the inventor arrived at a configuration as described below.

That is, as a leaning vehicle which provides an easy grasp of the size of the leaning vehicle to the driver without making an interval in the left-right direction between the two front wheels wider than the front-portion-vehicle-body cover located ahead of the driver seated on the seat, the inventor of the present teaching arrived at the configuration of the leaning vehicle 1 as in this embodiment. The inventor also figured out that even if the configuration of the leaning vehicle 1 as in this embodiment is adopted into a leaning vehicle, where an interval in the left-right direction between two front wheels is wider than a front-portion-vehicle-body cover located ahead of a driver seated on a seat, the driver easily grasps the size of the leaning vehicle.

### (Other Embodiments)

In the embodiment, the maximum dimension of the front-portion-vehicle-body-cover part 265 in the left-right direction is larger than the tread width between the left front wheel 31 and the right front wheel 32. Alternatively, the maximum dimension of the front-portion-vehicle-body-cover part in the left-right direction may be equal to or smaller than the tread width between the left front wheel and the right front wheel.

In the embodiment, the front-portion-vehicle-body-cover part 265 includes the light transmitting part 266 through which the driver seated on the seat surface 27c of the seat 27 can visually recognize at least a part of the left front wheel unit 3a and at least a part of the right front wheel unit 3b directly. Alternatively, the front-portion-vehicle-body-cover part may include a light transmitting part through which the driver seated on the seat surface of the seat can visually recognize at least a part of the left front wheel unit and at least a part of the right front wheel unit indirectly. In this case, the driver seated on the seat surface of the seat uses an optical part such as a mirror provided in the leaning vehicle to visually recognize at least a part of the left front wheel unit and at least a part of the right front wheel unit through the light transmitting part indirectly.

The driver can more intuitively recognize the left front wheel and the right front wheel in the case where the driver seated on the seat surface of the seat can visually recognize at least a part of the left front wheel unit and at least a part of the right front wheel unit directly through the light transmitting part as in this embodiment than in the case where the driver visually recognizes at least a part of the left front wheel unit and at least a part of the right front wheel unit indirectly.

In the embodiment, the seat 27 includes the seat portion 27a and the seat back 27b. Alternatively, the seat may be a so-called straddled type seat including only a seat portion.

In the embodiment, the left-light-transmitting part 267 and the right-light-transmitting part 268 are formed integrally with the front-portion-vehicle-body-cover part 265. That is, the left-light-transmitting part 267 and the right-light-transmitting part 268 are connected to each other in the left-right direction. Alternatively, the left-light-transmitting part and the right-light-transmitting part may be formed separately from the front-portion-vehicle-body-cover part. The light transmitting part may not include the left-light-transmitting part and the right-light-transmitting part.

In the embodiment, the handlebar support part 25 is provided separately from the front framework part 211. Alternatively, the handlebar support part may be integrally provided with the front framework part. That is, the handlebar support part may be integrally provided with the main framework part.

In the embodiment, the main framework part 21a includes the front framework part 211 and the rear framework part 212. Alternatively, the main framework part may include at least a part of a casing of the power unit, in addition to the front framework part and the rear framework part.

In the embodiment, the vehicle body frame 21 includes the main framework part 21a linearly extending in the front-rear direction and the handlebar support part 25. The vehicle body frame 21 of this embodiment, however, is an example of the vehicle body frame. The vehicle body frame may include a framework part and a handlebar support part having configurations different from those of the embodiment. The vehicle body frame may include a head pipe supported by the framework part and rotatably supporting the steering shaft, instead of the handlebar support part.

In the embodiment, the handlebar support part 25 is formed in a tower shape by plate-shaped bar members. Alternatively, the handlebar support part may be constituted by pipe members or plate-shaped members as long as the handlebar support part can rotatably support the steering handle.

In the embodiment, the leaning linkage mechanism 5 is the double wishbone-type linkage mechanism. Alternatively, the leaning linkage mechanism may be a linkage mechanism of another type, such as a parallelogram linkage type.

In the case where the leaning linkage mechanism is of a parallelogram linkage type, the leaning-linkage mechanism includes a pair of cross members disposed in the top-bottom direction and extending in the left-right direction in parallel with each other, a left side member extending in the top-bottom direction and connecting the left ends of the pair of cross members to each other, and a right side member extending in the top-bottom direction and connecting the right ends of the pair of cross members to each other. Center portions of the pair of cross members in the longitudinal direction are rotatably connected to the leaning-linkage-mechanism-support part. The left side member is connected to the left front wheel. The right side member is connected to the right front wheel.

In the embodiment, the main framework part 21a includes the front framework part 211 and the rear framework part 212. Alternatively, the main framework part may be one unit, or may be constituted by coupling three or more members in the front-rear direction. The main framework part may be constituted by coupling a plurality of parts in the left-right direction. The main framework part may be constituted by using pipe members.

In the embodiment, a rear portion of the front framework part 211 is lower than a front portion of the front framework part 211. Alternatively, the front framework part may have a uniform height in the front-rear direction, or may have a front portion lower than a rear portion thereof.

In the embodiment, the dimension of the rear framework part 212 in the left-right direction is smaller than the dimension of the front framework part 211 in the left-right direction, and the height of the rear framework part 212 is larger than the height of the front framework part 211. Alternatively, the dimension of the rear framework part in the left-right direction may be equal to or larger than the dimension of the front framework part in the left-right direction. The height of the rear framework part may be equal to or smaller than the height of the front framework part.

In the embodiment, the three-wheeled vehicle has been described as an example of the leaning vehicle, but the leaning vehicle may be a four-wheeled vehicle or a vehicle other than the three-wheeled vehicle.

- 1: leaning vehicle
- 2: vehicle main body
- 3: front wheel unit
- 3a: left front wheel unit
- 3b: right front wheel unit
- 4: rear wheel
- 5: leaning linkage mechanism
- 6: steering mechanism
- 7: buffer device
- 8: power unit (driving source)
- 21: vehicle body frame
- 21a: main framework part
- 211: front framework part
- 211a: front-framework-side-wall portion
- 211b: front-framework-bottom-wall portion
- 212: rear framework part
- 212a: rear-framework-side-wall portion
- 212b: rear-framework-beam portion
- 22: leaning-linkage-mechanism-support part
- 23: rear arm
- 24: rear-arm-support part
- 25: handlebar support part
- 25a: handle-support-leg part
- 25b: handle-support-beam part
- 25c: handle-support-top-panel part
- 26: vehicle body cover
- 26a: vehicle-body-cover-main body
- 26b: upper cover
- 26c: opening
- 261: left step
- 262: right step
- 264: motor cover
- 265: front-portion-vehicle-body-cover part
- 266: light transmitting part
- 267: left-light-transmitting part
- 268: right-light-transmitting part
- 27: seat
- 27a: seat portion
- 27b: seat back
- 27c: seat surface
- 28: buffer-device-support part
- 28a: buffer-device-support-main-body portion
- 28b: tower portion
- 31: left front wheel
- 32: right front wheel
- 33: left front fender
- 34: right front fender
- 51: left arm mechanism
- 511: left-upper-arm member
- 512: left-lower-arm member
- 513: left knuckle
- 52: right arm mechanism
- 521: right-upper-arm member
- 522: right-lower-arm member
- 523: right knuckle
- 61: bar handle
- 62: steering shaft
- 63: steering-shaft-support part
- 71: left buffer device
- 72: right buffer device
- C: cabin
- P: steering axis
- SH: steering handle

## Claims

1. A leaning vehicle (1) configured to lean leftward when turning to the left and lean rightward when turning to the right, comprising:
a vehicle body frame (21);
a seat (27) supported by the vehicle body frame (21) and on which a driver is seated;
a left front wheel unit (3a) located at the left of the vehicle body frame (21) and including a left front wheel (31);
a right front wheel unit (3b) located at the right of the vehicle body frame (21) and including a right front wheel (32); and
a front-portion-vehicle-body cover (265) located on the vehicle body frame (21) between the left and right front wheel units (3a, 3b) and the seat (27) in a front-rear direction such that the front-portion-vehicle-body cover (265) covers a front of the driver seated on the seat (27);
wherein
the front-portion-vehicle-body cover (265) includes a light transmitting part (2 66) which is made of a light transmissive material and sized to enable the driver seat ed on the seat (27) to visually recognize therethrough at least a part of the left front wheel unit (3a) and at least a part of the right front wheel unit (3b) even in a state where the leaning vehicle (1) leans leftward or rightward, **characterised in that**
at least a part of the light transmitting part (266) is disposed at a part of the front-portion-vehicle-body cover (265) arranged at the rear of the left and right front wheels (31, 32) and in a space between the left and right front wheel units (3a, 3b) and the seat (27) when seen from a left-right direction of the vehicle body frame (21).

2. The leaning vehicle (1) according to claim 1, wherein
the light transmitting part (266) is provided in the front-portion-vehicle-body cover (265) at a position which enables the driver seated on the seat (27) to visually recognize therethrough, in the top-bottom direction, at least a portion between an upper end and a lower end of the left front wheel unit (3a) and at least a portion between an upper end and a lower end of the right front wheel unit (3b).

3. The leaning vehicle (1) according to claim 1 or 2, wherein
the left front wheel unit (3a) and the right front wheel unit (3b) are disposed ahead of the front-portion-vehicle-body cover (265), such that the left and right front wheel units (3a, 3b) at least partially overlap the front-portion-vehicle-body cover (265) in a front view of the vehicle.

4. The leaning vehicle (1) according to any one of claims 1 to 3, wherein
the light transmitting part (266) includes:
a left-light-transmitting part (267) which enables the driver seated on the seat (27) to visually recognize therethrough at least a part of the left front wheel unit (3a); and
a right-light-transmitting part (268) which enables the driver seated on the seat (27) to visually recognize therethrough at least a part of the right front wheel unit (3b).

5. The leaning vehicle (1) according to any one of claims 1 to 4, wherein
the light transmitting part (266) is formed on the front-portion-vehicle-body cover (265) such that an upper portion of the light transmitting part (266) is located further upward than a seat surface (27c) of the seat (27), and a lower portion of the light transmitting part (266) is located further downward than the seat surface (27c) of the seat (27).

6. The leaning vehicle (1) according to any one of claims 1 to 5, further comprising
a vehicle body cover (26) including the front-portion-vehicle-body cover (265) and constituting a cabin (C) which can accommodate the driver seated on the seat (27).

## Patentansprüche

1. Ein Neigungsfahrzeug (1), das dazu konfiguriert ist, sich nach links zu neigen, wenn das Fahrzeug nach links fährt, und sich nach rechts zu neigen, wenn das Fahrzeug nach rechts fährt, wobei das Neigungsfahrzeug folgende Merkmale aufweist:
einen Fahrzeugkörperrahmen (21);
einen Sitz (27), der von dem Fahrzeugkörperrahmen (21) getragen wird und auf dem ein Fahrer sitzt;
eine linke Vorderradeinheit (3a), die sich auf der linken Seite des Fahrzeugkörperrahmens (21) befindet und ein linkes Vorderrad (31) umfasst;
eine rechte Vorderradeinheit (3b), die sich auf der rechten Seite des Fahrzeugkörperrahmens (21) befindet und ein rechtes Vorderrad (32) umfasst; und
eine Vorderabschnittfahrzeugkörperabdeckung (265), die auf dem Fahrzeugkörperrahmen (21) zwischen der linken und der rechten Vorderradeinheit (3a, 3b) und dem Sitz (27) in einer Vorne-Hinten-Richtung derart angeordnet ist, dass die Vorderabschnittfahrzeugkörperabdeckung (265) eine Vorderseite des Fahrers abdeckt, der auf dem Sitz (27) sitzt;
wobei
die Vorderabschnittfahrzeugkörperabdeckung (265) ein lichtübertragendes Teil (266) umfasst, das aus einem lichtdurchlässigen Material besteht und dimensioniert ist, um dem Fahrer, der auf dem Sitz (27) sitzt, zu ermöglichen, durch dasselbe auf visuelle Weise zumindest einen Teil der linken Vorderradeinheit (3a) und zumindest einen Teil der rechten Vorderradeinheit (3b) zu erkennen, selbst in einem Zustand, in dem das Neigungsfahrzeug (1) sich nach links oder nach rechts neigt,
**dadurch gekennzeichnet, dass** zumindest ein Teil des lichtübertragenden Teils (266) an einem Teil der Vorderabschnittfahrzeugkörperabdeckung (265) angeordnet ist, das an der Rückseite des linken und des rechten Vorderrades (31, 32) und in einem Raum zwischen der linken und der rechten Vorderradeinheit (3a, 3b) und dem Sitz (27) angeordnet ist, bei Betrachtung aus einer Links-Rechts-Richtung des Fahrzeugkörperrahmens (21).

2. Das Neigungsfahrzeug (1) gemäß Anspruch 1, wobei
das lichtübertragende Teil (266) in der Vorderabschnittfahrzeugkörperabdeckung (265) an einer Position bereitgestellt ist, die es dem Fahrer, der auf dem Sitz (27) sitzt, ermöglicht, durch dieselbe in einer Oben-Unten-Richtung zumindest einen Abschnitt zwischen einem oberen Ende und einem unteren Ende der linken Vorderradeinheit (3a) und zumindest einen Abschnitt zwischen einem oberen Ende und einem unteren Ende der rechten Vorderradeinheit (3b) zu erkennen.

3. Das Neigungsfahrzeug (1) gemäß Anspruch 1 oder 2, wobei
die linke Vorderradeinheit (3a) und die rechte Vorderradeinheit (3b) vor der Vorderabschnittfahrzeugkörperabdeckung (265) derart angeordnet sind, dass die linke und die rechte Vorderradeinheit (3a, 3b) zumindest teilweise die Vorderabschnittfahrzeugkörperabdeckung (265) in einer Vorderansicht des Fahrzeuges überlappen.

4. Das Neigungsfahrzeug (1) gemäß einem der Ansprüche 1 bis 3, wobei
das lichtübertragende Teil (266) Folgendes umfasst:
ein linkes lichtübertragendes Teil (267), das es dem Fahrer, der auf dem Sitz (27) sitzt, ermöglicht, durch dasselbe zumindest einen Teil der linken Vorderradeinheit (3a) visuell zu erkennen; und
ein rechtes lichtübertragendes Teil (268), das es dem Fahrer, der auf dem Sitz (27) sitzt, ermöglicht, durch dasselbe zumindest einen Teil der rechten Vorderradeinheit (3b) visuell zu erkennen.

5. Das Neigungsfahrzeug (1) gemäß einem der Ansprüche 1 bis 4, wobei
das lichtübertragende Teil (266) auf der Vorderabschnittfahrzeugkörperabdeckung (265) derart gebildet ist, dass ein oberer Abschnitt des lichtübertragenden Teils (266) weiter oben angeordnet ist als eine Sitzoberfläche (27c) des Sitzes (27), und ein unterer Abschnitt des lichtübertragenden Teils (266) weiter unten angeordnet ist als die Sitzoberfläche (27c) des Sitzes (27).

6. Das Neigungsfahrzeug (1) gemäß einem der Ansprüche 1 bis 5, das ferner Folgendes aufweist:
eine Fahrzeugkörperabdeckung (26), die die Vorderabschnittfahrzeugkörperabdeckung (265) umfasst und eine Kabine (C) ausbildet, die den Fahrer, der auf dem Sitz (27) sitzt, beherbergen kann.

## Revendications

1. Véhicule à inclinaison (1) configuré pour s'incliner vers la gauche lors d'un virage à gauche et pour s'incliner vers la droite lors d'un virage à droite, comprenant:
un châssis de carrosserie de véhicule (21);
un siège (27) supporté par le châssis de carrosserie de véhicule (21) et sur lequel est assis un conducteur;
une unité de roue avant gauche (3a) située à gauche du châssis de carrosserie de véhicule (21) et comportant une roue avant gauche (31);
une unité de roue avant droite (3b) située à droite du châssis de carrosserie de véhicule (21) et comportant une roue avant droite (32); et
un couvercle de carrosserie de véhicule de partie avant (265) situé sur le châssis de carrosserie de véhicule (21) entre les unités de roue avant gauche et droite (3a, 3b) et le siège (27) dans une direction avant-arrière de sorte que le couvercle de carrosserie de véhicule de partie avant (265) recouvre l'avant du conducteur assis sur le siège (27);
dans lequel
le couvercle de carrosserie de véhicule de partie avant (265) comporte une partie de transmission de lumière (266) qui est réalisée en un matériau de transmission de lumière et dimensionnée de manière à permettre au conducteur assis sur le siège (27) de reconnaître visuellement à travers cette dernière au moins une partie de l'unité de roue avant gauche (3a) et au moins une partie de l'unité de roue avant droite (3b), même dans un état dans lequel le véhicule à inclinaison (1) s'incline vers la gauche ou vers la droite,
**caractérisé par le fait qu'**au moins une partie de la partie de transmission de lumière (266) est disposée au niveau d'une partie du couvercle de carrosserie de véhicule de partie avant (265) disposée à l'arrière des roues avant gauche et droite (31, 32) et dans un espace entre les unités de roue avant gauche et droite (3a, 3b) et le siège (27), lorsque vue depuis une direction gauche-droite du châssis de carrosserie de véhicule (21).

2. Véhicule à inclinaison (1) selon la revendication 1, dans lequel
la partie de transmission de lumière (266) est prévue dans le couvercle de carrosserie de véhicule de partie avant (265) à une position qui permet au conducteur assis sur le siège (27) de reconnaître visuellement à travers cette dernière, dans la direction de haut en bas, au moins une partie entre une extrémité supérieure et une extrémité inférieure de l'unité de roue avant gauche (3a) et au moins une partie entre une extrémité supérieure et une extrémité inférieure de l'unité de roue avant droite (3b).

3. Véhicule à inclinaison (1) selon la revendication 1 ou 2, dans lequel
l'unité de roue avant gauche (3a) et l'unité de roue avant droite (3b) sont disposées en avant du couvercle de carrosserie de véhicule de partie avant (265), de sorte que les unités de roue avant gauche et droite (3a, 3b) viennent au moins partiellement en chevauchement avec le couvercle de carrosserie de véhicule de partie avant (265) dans une vue de l'avant du véhicule.

4. Véhicule à inclinaison (1) selon l'une quelconque des revendications 1 à 3, dans lequel
la partie de transmission de lumière (266) comporte:
une partie de transmission de lumière gauche (267) qui permet au conducteur assis sur le siège (27) de reconnaître visuellement, à travers cette dernière, au moins une partie de l'unité de roue avant gauche (3a); et
une partie de transmission de lumière droite (268) qui permet au conducteur assis sur le siège (27) de reconnaître visuellement, à travers cette dernière, au moins une partie de l'unité de roue avant droite (3b).

5. Véhicule à inclinaison (1) selon l'une quelconque des revendications 1 à 4, dans lequel
la partie de transmission de lumière (266) est formée sur le couvercle de carrosserie de véhicule de partie avant (265) de sorte qu'une partie supérieure de la partie de transmission de lumière (266) soit située plus vers le haut qu'une surface d'assise (27c) du siège (27), et qu'une partie inférieure de la partie de transmission de lumière (266) soit située plus vers le bas que la surface d'assise (27c) du siège (27).

6. Véhicule à inclinaison (1) selon l'une quelconque des revendications 1 à 5, comprenant par ailleurs
un couvercle de carrosserie (26) comportant le couvercle de carrosserie de véhicule de partie avant (265) et constituant une cabine (C) qui peut accueillir le conducteur assis sur le siège (27).
